# EUROPÄISCHE PATENTSCHRIFT

(11) **EP 1 722 255 B1**
(45) Veröffentlichungstag und Bekanntmachung des Hinweises auf die Patenterteilung: **28.10.2009**
(21) Anmeldenummer: 06015947.2
(22) Anmeldetag: 08.04.2004
(51) Int. Cl.: G02B 5/30, B42D 15/10, G03H 1/18

(54) **Folie und optisches Sicherungselement**
Film and optical fuse element
Film et élément de sécurité optique

(30) Priorität: 17.04.2003 DE 10318157
(43) Veröffentlichungstag der Anmeldung: 15.11.2006
(62) Teilanmeldung aus: 04726432.0
(73) Patentinhaber: Leonhard Kurz Stiftung & Co. KG, 90763 Fürth (DE)
(72) Erfinder: Katschorek, Haymo, 90587 Obermichelbach (DE); Seitz, Mathias, 91054 Buckenhof (DE)
(74) Vertreter: LOUIS, PÖHLAU, LOHRENTZ

(56) Entgegenhaltungen:
- EP-A- 1 028 359
- EP-A- 1 079 245
- EP-A- 1 203 968
- EP-A- 1 219 979
- WO-A-98/52077

## Beschreibung

Die Erfindung betrifft ein Substrat, insbesondere eine Folie, Prägefolie, Laminierfolie oder Stickerfolie, die über eine Trägerschicht und eine Replikationsschicht verfügt. Die Erfindung betrifft weiter ein optisches Sicherungselement zur Sicherung von Banknoten, Kreditkarten und dergleichen, das eine Replikationsschicht aufweist.

Im Bereich der Flüssigkristall-Display-Technik ist die Ausrichtung von Flüssigkristall-Polymeren (Liquid-Crystal-Polymers = LCP) an Orientierungsschichten bekannt. Hier wird zumeist eine Polyimid-Schicht durch einen mechanischen Bürstprozess ausgerichtet. In einem zweiten Prozessschritt werden Flüssigkristall-Polymere auf die Orientierungsschicht aufgebracht, die sich sodann an dieser Orientierungsschicht ausrichten.

Weiter wird in EP 1 227 347 die Ausrichtung von LCPs an einer Photopolymerschicht beschrieben.

Hierbei wird auf ein Substrat mittels eines Tintenstrahlerdruckers eine erste Orientierungsschicht aufgedruckt, die aus einem Photopolymer besteht, welches sich durch die Bestrahlung mit polarisiertem Licht in eine bestimmte Orientierungsrichtung ausrichten lässt. Diese Schicht wird nun mit polarisiertem Licht bestrahlt. Anschließend werden mittels eines Tintenstrahldruckers eine Schicht aus einem Flüssigkristall-Material auf die Orientierungsschicht aufgebracht und Bedingungen geschaffen, unter denen sich das Flüssigkristall-Material ausrichtet. Anschließend wird die Flüssigkristall-Schicht mittels UV-Licht ausgehärtet.

Hierbei ist es auch möglich, dass zwei Orientierungsschichten übereinander auf ein Substrat aufgebracht werden können. Die beiden Schichten werden hierbei jeweils mit unterschiedlich polarisiertem Licht bestrahlt und dann fixiert, so dass sich Orientierungsschichten mit unterschiedlicher Orientierung ergeben, die übereinander angeordnet sind. Durch diese Mehrfachbeschichtung in Kombination mit einer entsprechenden musterförmigen Ausgestaltung der einzelnen übereinander angeordneten Photopolymerschichten sind Bereiche mit unterschiedlicher Orientierung erzielbar.

In WO 01/60589 wird vorgeschlagen, in eine Orientierungsschicht für LCD-Displays mittels eines Schneidewerkzeugs sich überkreuzende Rillen einzubringen. Hierdurch werden in diesem Bereich eine Orientierung eines Teils der Moleküle in der einen Richtung und eine Orientierung eines anderen Teils der Moleküle in der anderen Richtung erzielt.

Der Erfindung liegt nun die Aufgabe zugrunde, die Herstellung von optischen Sicherungselementen und/oder dekorativen Folien zu verbessern.

Die Aufgabe wird durch eine Folie nach Anspruch 1 gelöst. Die Aufgabe wird weiter von einem optischen Sicherungselement nach Anspruch 24 gelöst.

Durch die Erfindung wird es ermöglicht, Flüssigkristalle in einem Bereich gezielt und mit hoher Präzision in unterschiedlichen Orientierungsrichtungen auszurichten, wodurch sich verschiedenartige optische Sicherungsmerkmale erzeugen lassen, die nur unter Polarisatoren sichtbar sind und damit offensichtliche, aber leicht detektierbare Eigenschaften aufweisen. Hierdurch lässt sich ein hohes Maß an Fälschungssicherheit erzielen. Weiter wird der Herstellungsprozess vereinfacht, beschleunigt und verbilligt. So ist es beispielsweise bei der Verwendung von Photopolymeren notwendig, zahlreiche, aufwendige Belichtungsschritte durchzuführen und/oder aufwendige Masken zu fertigen.

Als Flüssigkristall-Material sind hierbei Flüssigkristalle in monomerer und polymerer Form verwendbar.

Vorteilhafte Ausgestaltungen der Erfindung sind in den Unteransprüchen bezeichnet.

Besonders fälschungssichere optische Sicherheitsmerkmale lassen sich dadurch erzielen, dass die diffraktive Struktur einen mit der Schicht aus einem Flüssigkristall-Material beschichteten Bereich aufweist, in dem sich die Orientierungsrichtung der Struktur stetig ändert. Wird ein mittels einer solchen diffraktiven Struktur erzeugtes Sicherheitsmerkmal durch einen Polarisator mit beispielsweise rotierender Polarisationsrichtung betrachtet, so lassen sich aufgrund der sich linear ändernden Polarisationsrichtung des Sicherheitselements verschiedene gut erkennbare Sicherheitsmerkmale, beispielsweise Bewegungseffekte, erzeugen.

Weiter ist es auch zweckmäßig, aneinander grenzende Bereiche, die mit der Schicht aus einem Flüssigkristall-Material beschichtet sind, mit unterschiedlichen Orientierungsrichtungen der diffraktiven Struktur vorzusehen.

Weiter ist es möglich, dass die diffraktive Struktur einen ersten Bereich zur Orientierung von Flüssigkristall-Material aufweist, der von der Schicht aus einem Flüssigkristall-Material bedeckt ist, und dass die diffraktive Struktur einen zweiten Bereich zur Erzeugung eines optischen Beugungseffekts, beispielsweise zur Erzeugung eines Hologramms oder eines Kinoforms, aufweist. Damit werden in ein und derselben Schicht nebeneinander ein auf Polarisationswirkung beruhendes Sicherheitsmerkmal und ein auf einem Beugungseffekt beruhendes Sicherheitsmerkmal erzeugt. Hierdurch lässt sich ein Sicherheitselement mit einem hohen Maß an Fälschungssicherheit gepaart mit niedrigen Produktionskosten erzielen. Mittels ein und desselben Verfahrensschrittes lässt sich hierdurch die Grundlage für zwei unterschiedliche optische Effekte legen.

Besonders vorteilhaft ist es hierbei, dass die in dem ersten Bereich erzeugte Polarisationsdarstellung und eine in dem zweiten Bereich erzeugte holographische Darstellung einander ergänzende Darstellung bilden. Beispielsweise wird von der holographischen Darstellung ein Baum dargestellt, dessen Blätter von der Polarisationsdarstellung gebildet werden. Die Inhalte der Polarisationsdarstellung und der holographischen Darstellung ergänzen sich damit inhaltlich derart, dass eine Veränderung einer der Darstellungen sofort aus der anderen Darstellung sichtbar wird. Dadurch wird die Fälschungssicherheit weiter erhöht.

Es wird eine diffraktive Struktur verwendet, die sich aus der Überlagerung einer ersten Struktur zur Erzeugung eines optischen Effektes und einer zweiten Struktur zur Orlentierung des Flüssigkristall-Materials ergibt. Es hat sich gezeigt, dass eine ausreichende Orientierung der Flüsslgkristellmoleküle durch die überlagerte zweite Struktur möglich ist, wenn diese zweite Struktur eine höhere Spatialfrequenz als die erste Struktur besitzt und/ oder eine größere Profiltiefe als die erste Struktur besitzt. Besonders gute Orientierungseffekte lassen sich hierbei erzielen, wenn die Spatialfrequenz der zweiten Struktur mindestens zehnmal höher als die Spatialfrequenz der ersten Struktur gewählt wird oder wenn die Spatialfrequenz der zweiten Struktur größer als 2500 Linien pro mm ist.

Durch die Anwendung dieses Grundprinzips sind eine Vielzahl neuartiger optisch variabler Elemente generierbar, die zum einen einen durch eine Makrostruktur, eine Mattstruktur, ein Hologram oder ein Kinoform erzeugten polarisationsunabhängigen optischen Effekt zeigen und zum anderen einen durch orientierte Flüssigkristalle generierten Polarisationseffekt zeigen.

Durch die Kombination mit einer isotropen Mattstruktur (Streuung hat keine Vorzugsrichtung) ergibt sich der Vorteil, dass ein eventuell vorhandener Brechungszahlunterschied zwischen Replikationsschicht und Flüssigkristall-Material oder durch Störstellen in der Orientierung der Flüssigkristalle bewirkte Schleier oder Schatteneffekte kompensiert werden und nicht mehr sichtbar sind. Auch wird so ein zusätzlicher Kopierschutz geschaffen. Die Streuung des polarisierten Lichts verhindert die Erzeugung einer ausreichend fehlerfreien Orientierungsschicht durch ein auf Photopolymere gestütztes Belichtungsverfahren.

Weiter ist es zweckmäßig, dass die Schicht aus einem Flüssigkristall-Material die diffraktive Struktur lediglich bereichsweise musterförmig bedeckt. Hierdurch ergeben sich weitere Gestaltungsmöglichkeiten.

Als vorteilhaft hat es sich erwiesen, eine Schutzlackschicht vorzusehen, die die Schicht aus einem Flüssigkristall-Material bedeckt.

Weiter ist es vorteilhaft, die Profiltiefe der diffraktiven Struktur zu variieren und dies zur Erzeugung von Farbeffekten zu nutzen, die nur unter dem Polarisator sichtbar sind.

Gemäß eines bevorzugten Ausführungsbeispiels der Erfindung weist die Folie eine weitere Schicht mit einer weiteren optisch wirksamen diffraktiven Struktur auf oder es ist eine weitere wirksame diffraktive Struktur auf der der Schicht aus einem Flüssigkristall-Material abgewandten Oberfläche der Replikationsschicht eingeprägt. Durch diese optisch wirksame diffraktive Struktur lassen sich weitere Kombinationen von beugungsoptischen Sicherheitsmerkmalen und nur in polarisiertem Licht erkennbaren Sicherheitsmerkmalen erzielen. Überlagert die weitere optisch wirksame diffraktive Struktur die als Orientierungsschicht wirkende diffraktive Struktur bereichsweise, so ist eine Überlagerung derartiger Effekte erzielbar. Weiter kann durch passergenaue Anordnung der beiden diffraktiven Strukturen eine inhaltliche Ergänzung der von diesen Strukturen optisch dargestellten Informationen erzielt werden.

Eine weitere Möglichkeit zur Erhöhung der Fälschungssicherheit besteht darin, dass die Folie zusätzlich ein Dünnfilmschichtsystem und/oder andere Sicherheitsfeatures, wie beispielsweise Teildemetallisierung aufweist. Weiter besteht die Möglichkeit, eine reflektierende Schicht, insbesondere eine metallische Schicht oder eine HRI-Schicht vorzusehen, so dass das Sicherheitselement als reflektives oder partiell reflektives Sicherheitselement ausgestaltet werden kann. Weiterhin können auch (partielle oder vollflächige) cholesterische Flüssigkristall-Schichten als Reflektor dienen.

Durch die Kombination der Schicht aus einem Flüssigkristall-Material mit den oben beschriebenen beugungsoptisch wirksamen Schichten, Interferenzschichten und/oder reflektiven Schichten lässt sich ein optisches Sicherungselement mit einem hohen Grad an Fälschungssicherheit erstellen, dessen Sicherheitsmerkmale durch Überlagerung oder gegenseitige Ergänzung stark miteinander verwoben sind und damit eine Manipulation erschweren. Ein weiterer Vorteil besteht in der Möglichkeit, mit dem menschlichen Auge erkennbare Sicherheitsmerkmale mit nur unter polarisiertem Licht erkennbaren Sicherheitsmerkmalen zu überlagern und damit ein nicht offensichtliches, maschinenlesbares Sicherheitsmerkmal zu überlagern.

Weiter besteht die Möglichkeit, ein optisches Sicherungselement als zweiteiliges Sicherungselement auszugestalten, bei dem ein Teilelement die Replikationsschicht und die Schicht aus einem Flüssigkristall-Material aufweist und bei dem ein zweites Teilelement einen Polarisator zur Überprüfung des von der Schicht aus einem Flüssigkristall-Material erzeugten Sicherheitsmerkmals aufweist. Hierdurch wird es dem Benutzer durch Betrachtung des ersten Teilelements über das zweite Teilelement möglich, das mit dem bloßen Auge nicht erkennbare Sicherheitsmerkmal zu überprüfen.

Weitere Vorteile ergeben sich dadurch, dass beide Teilelemente eine Schicht aus einem Flüssigkristall-Material aufweisen, die auf einer jeweiligen Replikationsschicht aufgebracht ist, in die eine diffraktive Struktur zur Orientierung des Flüssigkristall-Materials eingeprägt ist und die zumindest zwei Teilbereiche mit unterschiedlichen Orientierungsrichtungen der eingeprägten Struktur aufweist. Die Sicherheitselemente der beiden Teilelemente ergänzen sich, so dass es dem Benutzer durch Betrachtung des ersten Teilelements über das zweite Teilelement möglich ist, das mit bloßem Auge nicht erkennbare Sicherheitsmerkmal des ersten Teilelements zu überprüfen.

Im folgenden wird die Erfindung anhand mehrerer Ausführungsbeispiele unter Zuhilfenahme der beiliegenden Zeichnungen beispielhaft erläutert.
- Fig. 1: zeigt eine schematische Darstellung eines Sicherheitsdokuments, das mit einem erfindungsgemäßen optischen Sicherungselement versehen ist.
- Fig. 2: zeigt einen Schnitt durch eine erfindungsgemäße Prägefolie.
- Fig. 3: zeigt einen Schnitt durch eine erfindungsgemäße Stickerfolie.
- Fig. 4: zeigt eine schematische Schnittdarstellung eines auf einem Wertdokument aufgebrachten erfindungsgemäßen optischen Sicherungselements.
- Fig. 5a: zeigt eine Draufsicht auf ein erfindungsgemäßes optisches Sicherungselement.
- Fig. 5b: zeigt eine Schnittdarstellung des Sicherungselements nach Fig. 5a.
- Fig. 6a bis Fig. 6e: zeigen schematische Darstellungen diffraktiver Strukturen zur Orientierung von Flüssigkristallmolekülen.
- Fig. 7: zeigt eine Schnittdarstellung einer erfindungsgemäßen Folie gemäß eines ersten Ausführungsbeispiels.
- Fig. 8: zeigt eine Schnittdarstellung einer erfindungsgemäßen Folie für ein zweites Ausführungsbeispiel.
- Fig. 9: zeigt eine Schnittdarstellung eines erfindungsgemäßen optischen Sicherungselements für ein drittes Ausführungsbeispiel.

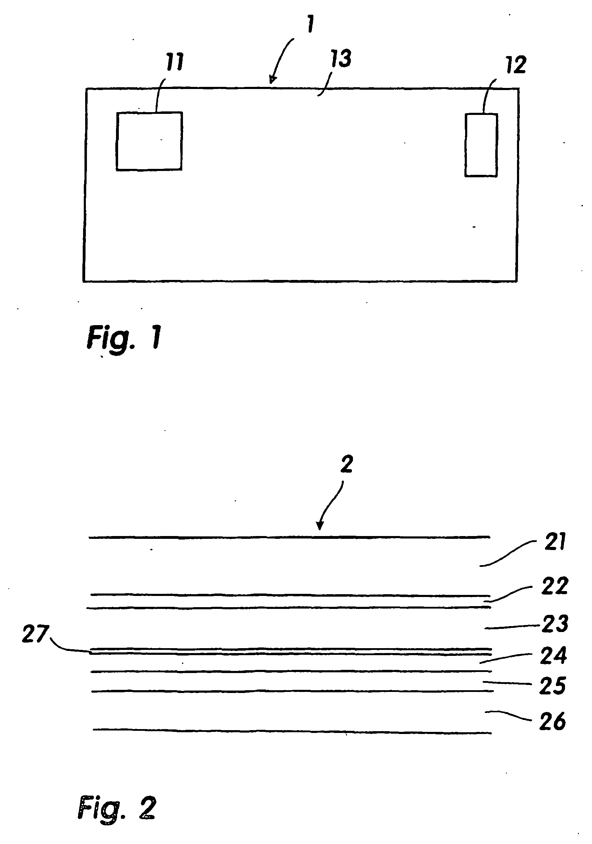

Fig. 1 zeigt ein Sicherheitsdokument 1, das aus einem Trägerelement 13 und einem aus zwei Teilelementen 11 und 12 bestehenden optischen Sicherheitselement besteht.

Bei dem Sicherheitsdokument 1 handelt es sich beispielsweise um eine Banknote, einen Ausweis, ein Ticket oder ein Software-Zertifikat. Das Trägerelement 13 besteht beispielsweise aus Papier oder aus einem flexiblen Kunststoff-Material.

Das Teilelement 12 besteht aus einem Polarisator, der in ein Fenster des Trägerelements 13 eingelassen ist oder der auf einen transparenten Bereich des Trägerelements 13 aufgebracht ist. Durch Knicken des Trägerelements 13 ist es einem Benutzer möglich, das Teilelement 11 durch das Teilelement 12 zu betrachten und damit von dem Teilelement 11 erzeugte Polarisationseffekte sichtbar zu machen.

Es ist auch möglich, auf das Teilelement 12 zu verzichten und auf dem Sicherheitsdokument lediglich das Teilelement 11 aufzubringen.

In diesem Fall kann das Trägerelement 13 auch aus einem unflexiblen Material bestehen, so dass das Sicherheitsdokument 1 beispielsweise eine Kreditkarte ist. In diesem Falle besteht das Trägerelement 13 aus einer üblichen Kunststoffkarte, auf deren Vorderseite beispielsweise der Name des Karteninhabers eingeprägt ist. Hierbei ist es möglich, dass diese Kunststoffkarte im Bereich des optischen Sicherungselements einen transparenten Bereich aufweist, so dass es sich bei dem optischen Sicherungselement um ein transmissives optisches Sicherungselement handeln kann.

Anhand der Figuren Fig. 2 bis Fig. 9 werden nun verschiedene Möglichkeiten der Herstellung sowie der Ausgestaltung eines erfindungsgemäßen optischen Sicherungselements aufgezeigt, das auch als Teilelement 11 nach Fig. 1 Verwendung finden kann.

Fig. 2 zeigt eine Prägefolie 2 mit sechs Schichten 21, 22, 23, 24, 25 und 26.

Die Schicht 21 ist eine Trägerschicht, die beispielsweise eine Dicke von etwa 12 µm bis 50 µm hat und von einer Polyesterfolie gebildet wird. Die Schichten 22, 23, 24, 25 und 26 bilden die Übertragungslage der Prägefolie 2.

Die Schicht 22 ist eine Ablöse- oder Schutzlackschicht, die vorzugsweise eine Dicke von etwa 0,3 bis 1,2 µm besitzt. Auf diese Schicht könnte auch verzichtet werden.

Die Schicht 23 ist eine Replikationsschicht, in die mittels eines Prägewerkzeugs diffraktive Strukturen einprägbar sind. Die Replikationsschicht 23 besteht hierbei vorzugsweise aus einem transparenten, thermoplastischen Kunststoffmaterial, das beispielsweise durch ein Druckverfahren aufgebracht werden kann.

Der Replizier-Lack hat hierbei beispielsweise folgende Zusammensetzung:

| Komponente | Gew.-Teile |
|---|---|
| hochmolekulares PMMA-Harz | 2000 |
| Silikonalkyd ölfrei | 300 |
| nichtionisches Netzmittel | 50 |
| niedrigviskose Nitrocellulose | 750 |
| Methylethylketon | 12000 |
| Toluol | 2000 |
| Diacetonalkohol | 2500 |

Die Trägerschicht 21 besteht beispielsweise aus einer PET Folie von 19 µm Dicke, auf die der oben angegebene Replizier-Lack mit einer Linienraster-Tiefdruckwalze aufgetragen wird, und zwar mit einem Auftraggewicht von 2,2 g/m² nach Trocknung. Die Trocknung erfolgt im Trockenkanal bei einer Temperatur von 100 bis 120 °C.

In die Schicht 23 wird sodann bei etwa 130 °C mittels einer beispielsweise aus Nickel bestehenden Matrize die diffraktive Struktur 27 eingeprägt. Zum Prägen der diffraktiven Struktur 27 wird die Matrize vorzugsweise elektrisch aufgeheizt. Vor dem Abheben der Matrize von der Schicht 23 nach der Prägung kann die Matrize wieder abgekühlt werden. Nach der Einprägung der diffraktiven Struktur 27 erhärtet der Replizierlack durch Vernetzung oder in sonstiger Weise.

Die Schicht 24 ist eine Schicht aus einem Flüssigkristall-Material (LC = Liquid Crystal). Die Schicht 24 hat vorzugsweise eine Dicke von 0,5 µm bis 5 µm. Im Prinzip sind alle möglichen Arten von FlüssigkristallMaterialien verwendbar, die die gewünschten optischen Eigenschaften aufweisen. Beispiele hierfür sind Flüssigkristallmaterialien der OPALVA Ö - Reihe der Fa. Vantico AG, Basel,CH.

Anschließend werden die Flüssigkristalle an einer als Orientierungsschicht dienenden Schicht 23 unter Zufuhr von etwas Wärme ausgerichtet. Anschließend erfolgt eine UV-Härtung des Flüssigkristall-Materials zur Fixierung der Orientierung der Flüssigkristall-Moleküle.

Weiter ist es auch möglich, dass die aufgedruckte Schicht aus einem lösungsmittelhaltigen Flüssigkristall-Material einem Trocknungsprozeß unterzogen wird und sich die Flüssigkristall-Moleküle während der Verdampfung des Lösungsmittels gemäß der diffraktiven Struktur 27 orientieren. Auch ist es möglich, dass lösungsmittelfreies Flüssigkristall-Material durch einen Druckprozeß aufgebracht wird und nach der Orientierung durch Vernetzung fixiert wird.

Die Schicht 25 ist eine Schutzlackschicht, die beispielsweise durch ein Druckverfahren auf die Schicht 24 aufgebracht wird. Auf die Schicht 25 könnte auch verzichtet werden. Die Schicht 25 hat beispielsweise eine Dicke von 0,5 µm bis 3 µm und besteht vorzugsweise aus UV vernetzbaren Acrylaten und abriebfesten thermoplastischen Acrylaten.

Die Schicht 26 ist eine Klebeschicht, die beispielsweise aus einem thermisch aktivierbaren Kleber besteht.

Zur Aufbringung der Prägefolie 2 auf ein Sicherheitsdokument oder auf einen zu sichernden Gegenstand wird die Prägefolie 2 mit der von den Schichten 21 bis 26 gebildeten Übertragungslage voran auf das Sicherheitsdokument bzw. den zu sichernden Gegenstand aufgebracht und dann unter Einwirkung von Wärme gegen das Sicherheitsdokument bzw. den zu sichernden Gegenstand gepresst. Dabei verbindet sich die Übertragungslage über die Klebeschicht 26 mit der entsprechenden Oberfläche des Sicherheitsdokuments oder des zu sichernden Gegenstands. Weiter löst sich in Folge der Wärmeentwicklung die Übertragungslage von der Trägerschicht 21. Das Ablösen der Übertragungslage von der Trägerschicht 13 wird hierbei durch die vorzugsweise wachsartige Ablöseschicht 22 erleichtert.

Bei der Prägefolie 2 kann es sich auch um eine andersartige Folie, beispielsweise um eine Laminierfolie handeln. In diesem Fall wäre die Schicht 22 durch eine weitere Schicht zu ersetzen, die die Haftung zum Träger gegebenenfalls verbessert.

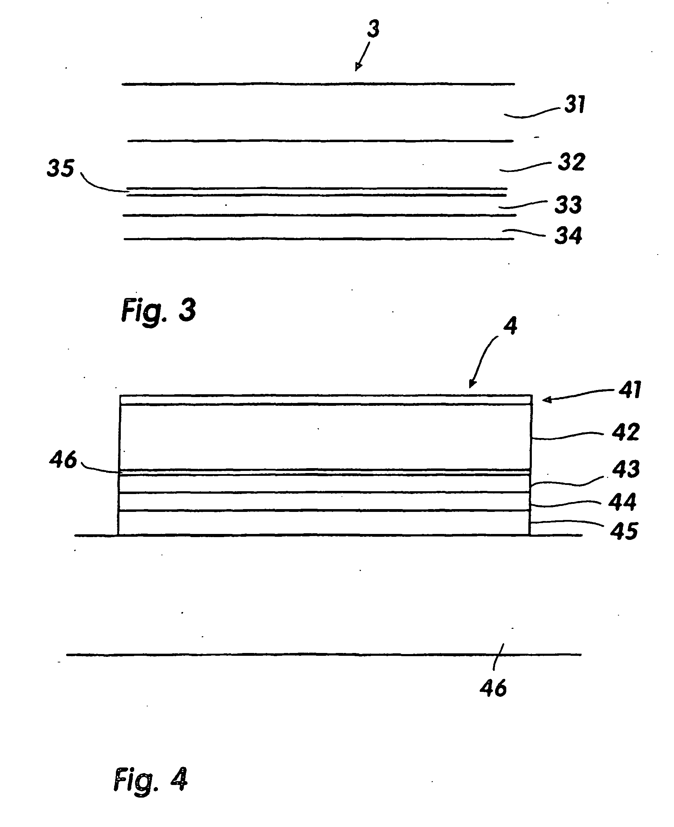

Fig. 3 zeigt eine Stickerfolie 3, die aus vier Schichten 31, 32, 33 und 34 besteht.

Die Schicht 31 ist eine Trägerschicht, die beispielsweise aus einem transparenten, teiltransparenten oder nicht transparenten Polyestermaterial einer Dicke von 12 µm bis 15 µm besteht. Die Schicht 32 ist eine Replikationsschicht, in die eine diffraktive Struktur 35 eingeprägt ist. Die Schicht 33 ist eine Schicht aus einem Flüssigkristall-Material und die Schicht 34 ist eine Schutzlack-Schicht. Die Schichten 32, 33 und 34 können hierbei wie die Schichten 23, 24 und 25 nach Fig. 2 ausgestaltet sein. Auf die Schicht 34 könnte auch verzichtet werden.

Fig. 4 zeigt ein optisches Sicherungselement 4 und ein Substrat 46, auf dem das optische Sicherungselement 4 aufgebracht ist. Bei dem Substrat 46 handelt es sich beispielsweise um ein zu sicherndes Sicherheitsdokument, beispielsweise um das Grundelement 13 nach Fig. 1 Das optische Sicherungselement 4 weist fünf Schichten 41, 42, 43, 44 und 45 auf. Die Schicht 4 ist eine Schutzlackschicht. Die Schicht 42 ist eine Replikationsschicht, in die eine diffraktive Struktur 46 eingeprägt ist. Die Schicht 43 ist eine Schicht aus einem Flüssigkristall-Material, die Schicht 44 ist eine Schutzlackschicht und die Schicht 45 ist eine Klebeschicht, die die Schicht 44 mit dem Substrat 46 verklebt. Die Schichten 41, 42, 43, 44 und 45 sind beispielsweise wie die Schichten 21, 22, 23, 24, 25 und 26 nach Fig. 2 ausgestaltet.

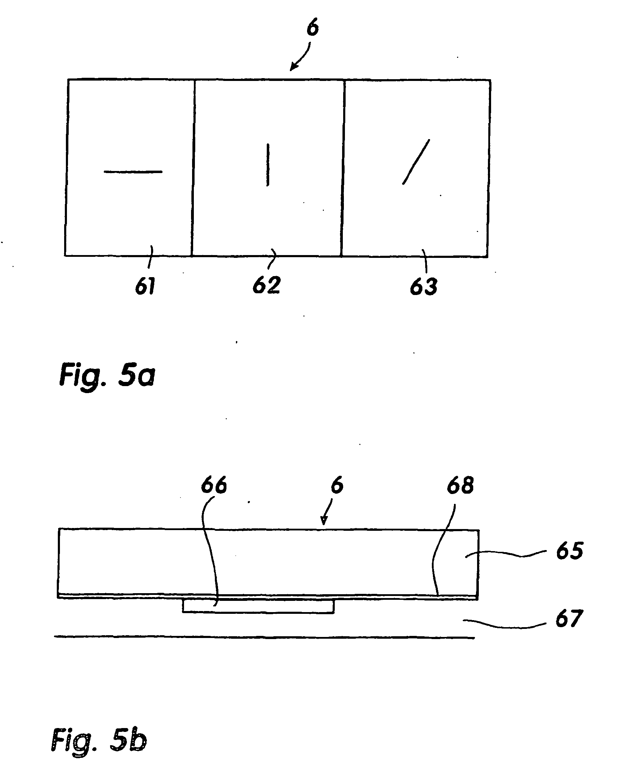

Anhand von Fig. 5a werden nun weitere Möglichkeiten geschildert, wie die diffraktiven Strukturen 27, 35 und 46 auszuformen sind.

Fig. 5a zeigt ein optisches Sicherheitselement 6, das in mehrere Bereiche 61, 62 und 63 aufteilbar ist.

Die Bereiche 61, 62 und 63 sind vollflächig mit einer diffraktiven Struktur beprägt. Die diffraktive Struktur besteht beispielsweise aus einer Vielzahl von nebeneinander angeordneten, parallelen Rillen, die eine Orientierung von Flüssigkristall-Molekülen ermöglichen. Beispielsweise haben diese Rillen eine Spatialfrequenz von 300 bis 3000 Linien /mm und eine Profiltiefe von 200 nm bis 600 nm. Auch flachere Tiefen sind denkbar, beispielsweise im Bereich von 50 nm. Besonders gute Orientierungsergebnisse lassen sich hierbei durch diffraktive Strukturen erreichen, deren Spatialfrequenz im Bereich von 1000 bis 3000 Linien/mm angesiedelt sind. Die Längsrichtung dieser Rillen stellt hierbei die Orientierungsrichtung der diffraktiven Struktur dar.

Weiter ist es möglich, die Profiltiefe der Rillen zu variieren. Beim Auftragen des Flüssigkristall-Materials, beispielsweise mittels eines Rakeis, ergeben sich hierdurch in unterschiedlichen Bereichen der Folie unterschiedlich Dicken der Schicht aus einem Flüssigkristall-Material. Dies führt zur Erzeugung von Farbeffekten, die nur unter dem Polarisator sichtbar sind.

Diese Effekte können weiter auch durch die Verwendung tiefer Rillen erzeugt werden, die beim Druckprozeß bereichsweise in unterschiedlicher Höhe mit Flüssigkristall-Material gefüllt werden (beispielsweise durch eine geeignete Rasterwalze mit unterschiedlichem Auftragsgewicht und/oder durch Verwendung einer Kammerrakel).

Farbspiele und Muster können auch durch Verwendung geeigneter Trägermaterialien, zum Beispiel durch Doppelbrechung, erzeugt werden. Hierbei kann auch durch gezielte Einstellung der Orientierungsrichtung des Flüssigkristallmaterials ein interessantes Farbspiel erzielt werden, das durch Wechselwirkung der Flüssigkristalle mit dem strukturierten Trägermaterial entsteht (beispielsweise durch Variation der Winkel in der Strukturschicht oder durch Formung von Guilloche-Figuren).

Die Orientierungsrichtung der diffraktiven Struktur ist in den Bereichen 61, 62 und 63 unterschiedlich. So weist der Bereich 61 beispielsweise eine Vielzahl von parallelen, waagrecht angeordneten Rillen auf, der Bereich 62 eine Vielzahl von senkrecht angeordneten parallelen Rillen und der Bereich 63 eine Vielzahl von um 30 °C gegenüber der Senkrechten gekippten parallelen Rillen auf. Die diffraktive Struktur ist damit in dem Bereich 61 waagrecht orientiert, in dem Bereich 62 senkrecht orientiert und in dem Bereich 63 um 30 °C gegenüber der Senkrechten gekippt orientiert.

Weiter ist es möglich, dass die diffraktive Struktur von einer Vielzahl von Rillen gebildet wird, deren Orientierungsrichtung sich entlang der Rillen verändert. So kann sich beispielsweise die Orientierungsrichtung der diffraktiven Struktur entlang der waagrechten oder senkrechten Achse im Bereich 61 stetig ändern. Hierdurch können beispielsweise Bewegungseffekte oder Graustufenverläufe erzielt werden.

Weiter ist es auch möglich, dass das optische Sicherungselement 6 eine Vielzahl von Bereichen mit unterschiedlicher Orientierungsrichtung der eingeprägten Struktur aufweist, deren Größe vorzugsweise unterhalb des für das menschliche Auge auflösbaren Bereiches liegt. Diese Bereiche bilden Pixel verschiedener, sich überlagernder Polarisationsdarstellungen, die abhängig von der Polarisationsrichtung des einfallenden Lichts mehr oder weniger sichtbar sind.

Weiter ist es auch möglich, dass lediglich in dem Bereich 62 diffraktive Strukturen zur Orientierung von Flüssigkristall-Material eingeprägt sind und dass die diffraktiven Strukturen in den Bereichen 61 und 63 zur Erzeugung eines optischen Beugungseffekts, insbesondere zur Erzeugung eines Hologramms, eines Kinegrams oder dergleichen dienen.

Wie in Fig. 5b dargestellt, weist das optische Sicherungselement 6 somit eine Replikationsschicht 65, eine Schicht aus einem Flüssigkristall-Material 66 und eine Klebeschicht 67 auf. In die Replikationsschicht 65 ist eine diffraktive Struktur 68 eingeprägt.

Die Replikationsschicht 65, die Schicht 66 und die Klebeschicht 67 sind beispielsweise wie die Schichten 23, 24 bzw. 26 nach Fig. 2 ausgestaltet.

Die Schicht 66 ist, wie in Fig. 5b dargestellt, lediglich bereichsweise im Bereich 62 auf die Replikationsschicht 62 aufgedruckt. In den Bereichen 61 und 63 ist die diffraktive Struktur 68 nicht mit Flüssigkristall-Material beschichtet, so dass in diesen Bereichen keine Polarisationswirkung durch orientierte Flüssigkristallmoleküle erzielt wird. Damit wird lediglich in dem Bereich 62 eine Polarisations-Darstellung erzeugt. In den Bereichen 61 und 63 kommt dagegen der durch die diffraktive Struktur 68 bewirkte optische Beugungseffekt zum Tragen.

Durch eine derartige Gestaltung wird von dem optischen Sicherungselement 6 eine optische Darstellung erzeugt, die sich aus einer Polarisationsdarstellung im Bereich 62 und zwei flankierenden holographischen Darstellungen in den Bereichen 61 und 63 zusammensetzt.

Vorzugsweise sind diese holographischen Darstellungen und die Polarisationsdarstellung sich inhaltlich ergänzende Darstellungen, die beispielsweise ein gemeinsames Wort oder eine gemeinsame graphische Darstellung bilden. Je nach dem gewählten gemeinsamen Bild oder dem darzustellenden gemeinsamen Wort können zwei oder mehrere der Bereiche 61 bis 63 in einer beliebigen Darstellung nebeneinander angeordnet sein. Beispielsweise ist die Darstellung eines holographischen Baumes vorstellbar, dessen Blätter von Polarisationsdarstellungen gebildet sind und damit nur bei Betrachtung in polarisiertem Licht oder über einen Polarisator erkennbar sind.

Erfindungsgemäß wird eine diffraktive Struktur verwendet, die sich aus der Überlagerung einer erste Struktur zur Erzeugung eines optischen Effektes und einer zweite Struktur zur Orientierung des Flüssigkristall-Materials ergibt. Hierbei hat es sich gezeigt, dass eine Orientierung der Flüssigkristallmoleküle durch die zweite Struktur möglich ist, wenn diese zweite Struktur eine höhere Spatialfrequenz besitzt (Grobstruktur-Feinstruktur) und/ oder eine größere Profiltiefe als die erste Struktur besitzt.

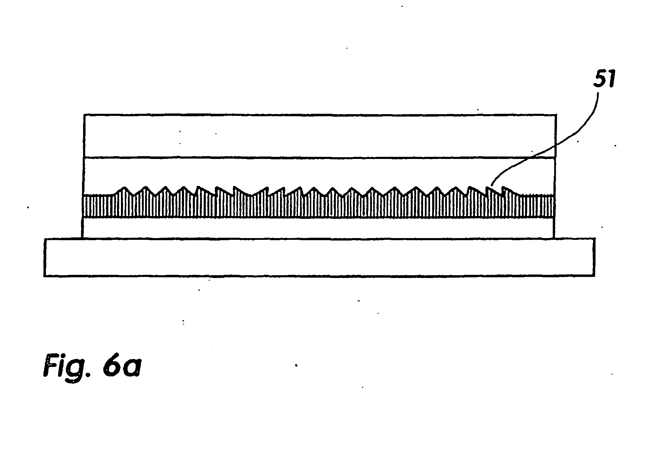

Dies wird nun im Folgenden anhand der Figuren 6a bis 6e erläutert, die schematische Darstellungen derartiger diffraktiver Strukturen 51 bis 55 zeigen.

Die diffraktive Struktur 51 ist eine additive Überlagerung einer Feinstruktur, beispielsweise einer Beugungsstruktur nullter Ordnung, und einer mikroskopisch feinen lichtstreuenden Grobtruktur. Die mikroskopisch feine lichtstreuende Grobstruktur ist eine Struktur aus der Gruppe von isotrop oder anisotrop streuenden Mattstrukturen, von Kinoformen oder von Fourier Hologrammen.

Weiter ist es auch möglich, als Grobstruktur eine Makrostruktur zu verwenden, die eine Spatialfrequenz von weniger als 300 Linien pro mm besitzt, so dass der von den Flüssigkristallen bewirkte Polarisationseffekt von einem durch die Makrostruktur erzeugten polarisationsabhängigen optischen Effekt überlagert wird. Als Makrostrukturen können beispielsweise Sägezahnprofile oder Mikro-Linsen verwendet werden,

Die diffraktiven Strukturen 52 bis 55 weisen jeweils eine sichtbares einfallendes Licht beugende Struktur mit einer Profilhöhe auf, deren Relieffunktion eine Überlagerung einer niederfrequenten Gitterstruktur G(x, y) mit einer hochfrequenten Reliefstruktur R(x, y) ist. Die niederfrequente Gitterstruktur G(x, y) weist ein bekanntes Profil auf, wie z.B. ein sinusförmiges, rechteckförmiges, ein symmetrisches bzw. asymmetrisches sägezahnförmiges Profil usw. Die hochfrequente Reliefstruktur R(x, y) weist eine Spatialfrequenz fR von vorzugsweise mindestens 2.500 Linien pro Millimeter auf. Die niederfrequente Gitterstruktur G(x, y) besitzt andererseits eine niedrige Gitter - Spatialfrequenz fG von z.B. weniger als 1.000 Linien/Millimeter. Vorzugsweise hat die Gitter - Spatialfrequenz fG einen Wert zwischen 100 Linien/Millimeter bis 500 Linien/Millimeter.

Die Relief - Profilhöhe hR der Reliefstruktur R(x, y weist einen Wert aus dem Bereich von 150 nm bis 220 nm auf; vorzugsweise wird die Relief - Profilhöhe hR aber aus dem engeren Bereich von 170 nm bis 200 nm ausgewählt. Die Gitter - Profilhöhe hG der Gitterstruktur G(x, y) ist grösser als die Relief - Profilhöhe hR zu wählen. Die Gitter - Profilhöhe hG weist bevorzugt einen Wert aus dem Bereich von 250 nm bis 500 nm auf.

Die niederfrequente Gitterstruktur G(x, y) beugt das einfallende Licht in Abhängigkeit von der Gitter - Spatialfrequenz fG in mehrere Beugungsordnungen und erzeugt demnach einen optischen Beugungseffekt. Die hochfrequente Reliefstruktur dient der Orientierung des Flüssigkristall-Materials.

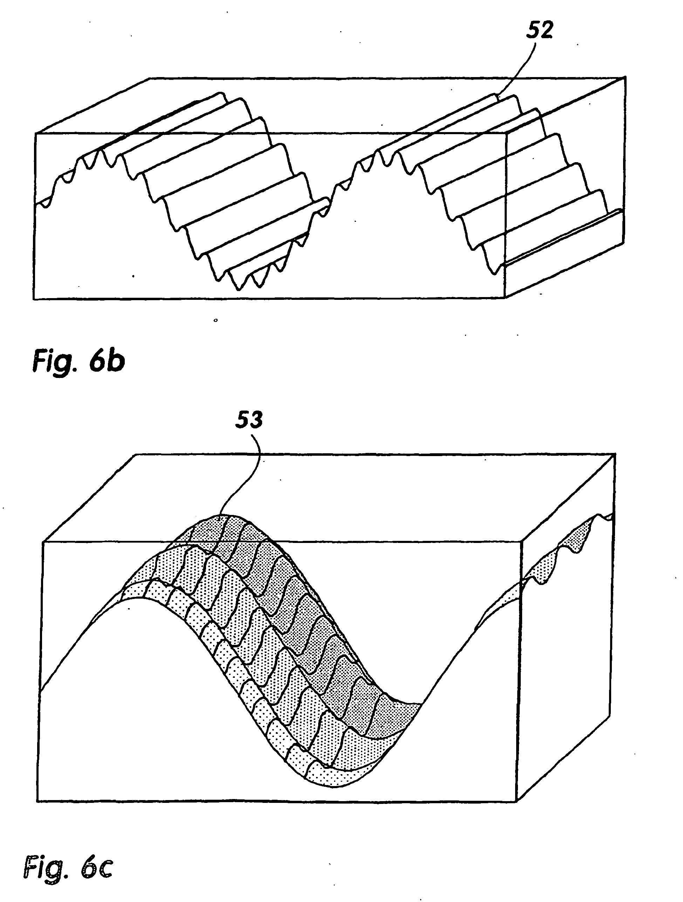

Die in der Figur 6b dargestellte diffraktive Struktur B(x) ist das Ergebnis einer additiven Überlagerung der sinusförmigen Gitterstruktur G(x) mit der sinusförmigen Reliefstruktur R(x), also B(x) = G(x) + R(x). Ein Gittervektor der Gitterstruktur G(x) und ein Reliefvektor der Reliefstruktur R(x) sind im wesentlichen parallel ausgerichtet.

Die Figur 6c zeigt eine diffraktive Struktur B(x), bei der der Gittervektor und der Reliefvektor in der Ebene der Koordinaten x und y orthogonal zueinander ausgerichtet sind. Beispielsweise ist die sinusförmige Gitterstruktur G(x) nur eine Funktion der Koordinate x, während die sinusförmige Reliefstruktur R(y) nur von der Koordinate y abhängig ist. Die additive Überlagerung der Gitterstruktur G(x) mit der Reliefstruktur R(y) ergibt die von beiden Koordinaten x, y abhängige diffraktive Struktur B(x, y), wobei B(x, y) = G(x) + R(y) ist. Aus rein darstellerischen Gründen ist in der Figur 6c die Grenzfläche mit den hintereinander liegenden Tälern der Reliefstruktur R(y) mit verschieden dichten Punktrastern unterlegt.

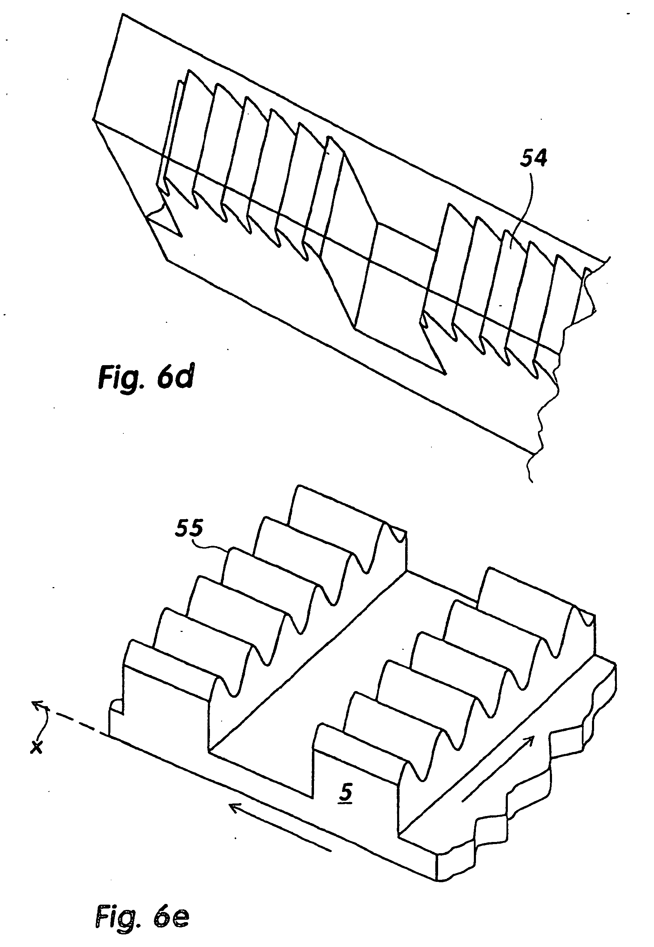

Die diffraktive Struktur B(x) der Figur 6d ist eine multiplikative Überlagerung B(x) = G(x)-{R(x) + C}. Die Gitterstruktur G(x) ist eine Rechteckfunktion mit den Funktionswerten [0, hG], einer Periode von 4.000 nm und einer Profilhöhe hG = 320 nm. Die Reliefstruktur R(x) = 0,5 · hR · sin(x) ist eine Sinusfunktion mit einer Periode von 250 nm und einer Profilhöhe hR = 200 nm. C bezeichnet eine Konstante, wobei C = hG - hR ist. Die diffraktive Struktur 64 ist auf den erhöhten Flächen der Rechteckstruktur mit der Reliefstruktur R(x) moduliert, während die diffraktive Struktur 64 auf dem Grund der Furchen der Rechteckstruktur glatt ist.

In der Figur 6e erzeugt die multiplikative Überlagerung der rechteckförmigen Gitterstruktur G(x) mit der Reliefstruktur R(y) die diffraktive Struktur B(x, y). Die Gitterstruktur G(x) und die Reliefstruktur R(y) besitzen die gleichen Parameter wie bei der diffraktive Struktur 63 mit der Ausnahme des Reliefvektors, der in die Richtung der Koordinate y zeigt.

Weiter ist es auch möglich, dass die Folien 2 und 3 und die optischen Sicherungselemente 4 und 6 weitere Schichten aufweisen, in die weitere optisch wirksame diffraktive Strukturen eingeprägt sind. Die weiteren Schichten können aus Metall seinein Dünnfilmschichtsystem zur Erzeugung von Farbverschiebungen mittels Interferenz bilden und/oder reflektierende Eigenschaften besitzen. Durch eine partielle Ausgestaltung dieser Schichten lassen sich weitere vorteilhafte Effekte erzielen.

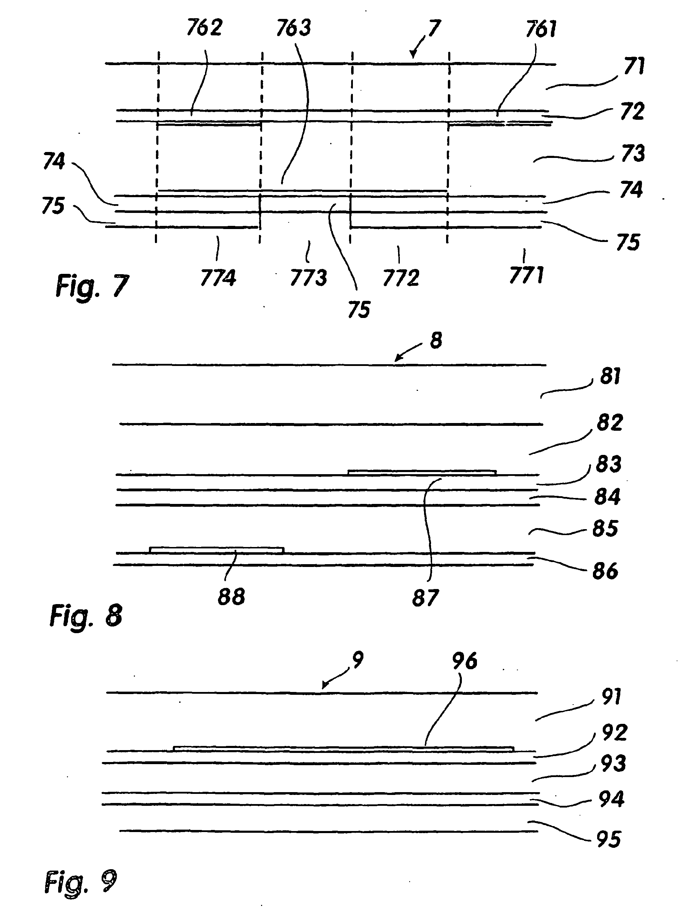

Einige Möglichkeiten, in den Folien 2 und 3 und den Sicherheitselementen 4 und 6 derartige weitere Schichten vorzusehen, werden nun anhand der Figuren Fig. 7 bis Fig. 9 erläutert.

Fig. 7 zeigt eine Prägefolie 7, die aus einer Trägerschicht 71 und einer aus Schichten 72, 73, 74 und 75 bestehenden Übertragungslage besteht. Die Schicht 72 ist eine Schutzlackschicht. Die Schicht 73 ist eine Replikationsschicht, in die diffraktive Strukturen 761, 762 und 763 eingeprägt sind. Die Schicht 74 ist eine reflektive Schicht und die Schicht 75 ist eine Klebeschicht.

Die Prägefolie 7 weist Bereiche 771 bis 774 auf, in denen die Prägefolie unterschiedlich ausgestaltet ist.

Die Schichten 71, 72, 73 und 75 sind wie die Schichten 21, 22, 23 bzw. 26 ausgestaltet. Bei der Schicht 74 handelt es sich um eine dünne, aufgedampfte Metallschicht oder um eine HRI-Schicht (HRI = High Refraction Index). Als Material für die Metallschicht kommen im wesentlichen Chrom, Aluminium, Kupfer, Eisen, Nickel, Silber oder Gold oder eine Legierung mit diesen Materialien in Frage.

Hierbei ist es auch möglich, dass die Reflexionsschicht 74 lediglich partiell und musterförmig ausgeformt ist und damit ein optisches Sicherungselement mit bereichsweise transmissiven oder reflektiven Eigenschaften bereitgestellt wird.

Die diffraktiven Strukturen 761 und 762 sind in den Bereichen 771 bzw. 774 der Prägefolie 7 eingeprägt. Die diffraktive Struktur 763 ist in den Bereichen 772, 773 und 774 der Prägefolie 7 in die Replikationsschicht 73 eingeprägt. Die diffraktiven Strukturen 761 und 762 einerseits und 763 andererseits sind auf gegenüberliegenden Seiten in die Replikationsschicht 73 eingeprägt, wobei sich in dem Bereich 774 die diffraktiven Strukturen 762 und 763 überlagern. Die Schicht 74 ist nur bereichsweise auf die Replikationsschicht 73 aufgebracht, so dass die diffraktive Struktur 763 nur in den Bereichen 774 und 772 mit einer Schicht aus Flüssigkristall-Material beschichtet ist.

Damit ergeben sich folgende unterschiedliche optische Effekte in den Bereichen 771 bis 774:

In den Bereich 761 kommt der durch die diffraktive Struktur 761 erzeugte Beugungseffekt zum tragen, so dass sich hier beispielsweise eine reflektive, holographische Darstellung ergibt. In den Bereichen 762 und 773 werden von der diffraktiven Struktur 763 nebeneinander liegend eine Polarisationsdarstellung und eine holographische Darstellung, beide reflektiv, wie beispielsweise in dem Ausführungsbeispiel nach Fig. 6 geschildert erzeugt. In dem Bereich 774 wird der von der diffraktiven Struktur 762 erzeugte beugungsoptische Effekt von dem durch die Schicht 74 erzeugten Polarisationseffekt überlagert, so dass sich beispielsweise eine holographische Darstellung mit Änderung der Polarisationsrichtung des einfallenden Lichtes verändert.

Fig. 8 zeigt eine Stickerfolie 8, die aus sechs Schichten 81, 82, 83, 84, 85 und 86 besteht. Die Schicht 81 ist eine Trägerschicht. Die Schichten 82 und 85 sind Replikationsschichten, in die diffraktive Strukturen 87 bzw. 88 eingeprägt sind. Die Schicht 83 ist eine Schicht aus einem Flüssigkristall-Material. Die Schichten 84 und 86 sind Klebeschichten.

Die Schichten 81, 82 und 85, 83 sowie 84 und 86 sind beispielsweise wie die Schichten 31, 32, 33 bzw. 34 nach Fig. 3 ausgestaltet.

Die Stickerfolie 8 wird wie die Stickerfolie 3 nach Fig. 3 hergestellt. Sodann wird auf den derart hergestellten Folienkörper die Replikationsschicht 85 mit der diffraktiven Struktur 88 und der Klebeschicht 86 beispielsweis mittels einer Laminierfolie auflaminiert.

Neben der in Fig. 8 dargestellten Positionierung der diffraktiven Strukturen 87 und 88 ist es auch möglich, die diffraktiven Strukturen 87 und 88 wie die diffraktiven Strukturen 763 bzw. 761 und 762 nach Fig. 7 zu positionieren und mit einer partiell ausgeformten Schicht 83 zu kombinieren. Damit lassen sich durch den in Fig. 8 dargestellten Schichtaufbau dieselben Effekte wie bei dem Schichtaufbau nach Fig. 7 erzielen.

Weiter ist es möglich, dass die Schicht 83 unterhalb der Schicht 85 angeordnet ist, so dass die diffraktive Struktur 87 lediglich beugungsoptisch wirkt.

Fig. 9 zeigt ein optisches Sicherungselement 9, das aus fünf Schichten 91, 92, 93, 94 und 95 besteht. Die Schicht 91 ist eine Replikationsschicht, in die eine diffraktive Struktur 96 eingeprägt ist. Die Schicht 92 ist eine Schicht aus einem Flüssigkristall-Material. Die Schicht 94 ist eine Reflexionsschicht. Die Schichten 93 und 92 bilden ein Dünnfilmschichtsystem, das blickwinkelabhängige Farbverschiebungen mittels Interferenz erzeugt. Die Schicht 95 ist eine Klebeschicht.

Die Schichten 91, 92 und 95 sind wie die Schichten 23, 24 und 26 nach Fig. 2 ausgestaltet. Die Schicht 94 ist wie die Schicht 75 nach Fig. 7 ausgestaltet.

Das Dünnfilmschichtsystem besteht aus einer Absorptionsschicht (vorzugsweise mit 30 bis 65 % Transmission), einer transparenten Distanzschicht als farbwechselerzeugende Schicht (?/4 oder ?/2 Schicht) und einer optischen Trennschicht (Ausbildung eines transmissiven Elements) oder einer reflektierenden Schicht (Ausbildung eines reflektiven Elements). Die Dicke der Distanzschicht ist hierbei so gewählt, dass bei Ausbildung eines reflektiven Elements die ?/4 Bedingung und bei Ausbildung eines transmissiven Elements die ?/2 Bedingung erfüllt ist, wobei ? vorzugsweise im Bereich des für einen menschlichen Betrachter sichtbaren Lichtes liegt.

Die Absorptionsschicht kann beispielsweise aus einem der folgenden Materialien oder aus einer Legierung der folgenden Materialien bestehen: Chrom, Nickel, Palladium, Titan, Kobalt, Eisen, Wolfram, Eisenoxid oder Kohlenstoff.

Als optische Trennschicht kommen insbesondere Materialien wie Oxide, Sulfide oder Chalkogenide in Frage. Entscheidend für die Wahl der Materialien ist, dass gegenüber den in der Abstandschicht verwendeten Materialien ein Unterschied im Brechungsindex besteht. Dieser Unterschied sollte vorzugsweise nicht geringer als 0,2 sein. Je nach den für die Distanzschicht verwendeten Materialien wird so ein HRI-Material oder ein LRI-Material (HRI = High Refraction Index; LRI = Low Refraction Index) eingesetzt.

Weiter ist es auch möglich, eine Dünnfilmschichtfolge, die blickwinkelabhängige Farbverschiebung mittels Interferenz erzeugt, aus einer Abfolge von hoch- und niedrigbrechenden Schichten aufzubauen. Bei einem derartigen Schichtaufbau kann auf die Verwendung einer Adsorptionsschicht verzichtet werden. Die hoch- und niedrigbrechenden Schichten einer solchen Dünnfilmschichtfolge bilden jeweils eine optisch wirksame Distanzschicht, die die oben beschriebenen Bedingungen einzuhalten hat. Je höher die Anzahl der Schichten gewählt wird, um so schärfer lässt sich die Wellenlänge des Farbwechseleffekts einstellen. Besonders vorteilhaft ist es hierbei, eine derartige Dünnfilmschichtfolge aus 2 bis 10 Schichten (geradzahlige Variante) oder 3 bis 9 Schichte (ungeradzahlige Variante) aufzubauen.

Beispiele üblicher Schichten einer solchen Dünnfilmschichtfolge und Beispiele von Materialien, die für die Schichten einer solchen Dünnfilmschichtfolge prinzipiell verwendbar sind, werden beispielsweise in WO 01/03945, Seite 5, Zeilen 30 bis Seite 8, Zeile 5 offenbart.

In dem Bereich der diffraktiven Struktur 98 wird so der von dem Dünnfilmschlchtsystem 93 erzeugte optische Interferenzeffekt von dem von der Schicht 92 erzeugten Polarisationseffekt überlagert. Ein von dem Dünnfilmschichtsystem 93 erzeugter blickwinkelabhängiger Farbwechseleffekt tritt so beispielsweise abhängig von der Polerisationsrichtung des einfallenden Lichtes lediglich für einen Teilbereich des optischen Sicherungselements 9 auf. Weiter ist es auch möglich, die diffraktive Struktur 96 und die Schicht 92 wie die diffraktive Struktur 68 und die Schicht 66 nach Fig. 6 auszugestalten und so eine Kombination von diffraktive Effekten, beugungsoptischen Effekten und Polarisationseffekten zu erzielen.

## Patentansprüche

1. Folie (2, 3), insbesondere Prägefolie, Laminierfolie oder Stickerfolie, mit einer Trägerschicht (21, 31) und einer Replikationsschicht (23, 32),
**dadurch gekennzeichnet,**
**dass** die Folie weiter eine Schicht (24, 33) aus einem Flüssigkristall-Material aufweist, die auf der Replikationsschicht (23, 32) aufgebracht ist, und dass in die der Schicht (24, 33) aus einem Flüssigkristall-Material zugewandten Oberfläche der Replikationsschicht (23, 32) eine diffraktive Struktur (27, 35) zur Orientierung des Flüssigkristall-Materials eingeprägt ist, die zumindest zwei Teilbereiche mit unterschiedlichen Orientierungsrichtungen der eingeprägten Struktur aufweist, wobei die diffraktive Struktur einen Bereich aufweist, in dem die diffraktive Struktur (51 bis 55) aus einer Überlagerung einer Grobstruktur zur Erzeugung eines optischen Effekts mit einer Feinstruktur höherer Spatialfrequenz zur Orientierung des Flüssigkristall-Materials gebildet ist.

2. Folie nach Anspruch 1,
**dadurch gekennzeichnet,**
**dass** die diffraktive Struktur einen Bereich aufweist, in dem sich die Orientierungsrichtung der Struktur stetig ändert und die mit der Schicht aus einem Flüssigkristall-Material beschichtet ist.

3. Folie nach Anspruch 1,
**dadurch gekennzeichnet,**
**dass** die diffraktive Struktur aneinandergrenzende Bereiche mit unterschiedlicher Orientierungsrichtung aufweiset, die mit der Schicht aus einem Flüssigkristall-Material beschichtet sind.

4. Folie nach Anspruch 1,
**dadurch gekennzeichnet,**
**dass** die diffraktive Struktur (68) einen ersten Bereich (62) zur Orientierung von Flüssigkristall-Material aufweist, der von der Schicht (66) aus einem Flüssigkristall-Material bedeckt ist, und dass die diffraktive Struktur (68) einen zweiten Bereich (61, 63) zur Erzeugung eines optischen Beugungseffekts, insbesondere zur Erzeugung eins Hologramms aufweist.

5. Folie nach Anspruch 4,
**dadurch gekennzeichnet,**
**dass** eine in dem ersten Bereich (62) erzeugte Polarisationsdarstellung und eine in dem zweiten Bereich (61, 63) erzeugte holographische Darstellung einander ergänzende Darstellung bilden.

6. Folie nach einem der vorhergehenden Ansprüche,
**dadurch gekennzeichnet,**
**dass** die Feinstruktur eine Periode kleiner als 400 nm besitzt.

7. Folie nach einem der Ansprüche 1 bis 5,
**dadurch gekennzeichnet,**
**dass** die Spatialfrequenz der Feinstruktur wenigstens zehnmal höher als die Spatialfrequenz der Grobstruktur ist.

8. Folie nach einem der vorhergehenden Ansprüche,
**dadurch gekennzeichnet,**
**dass** die Grobstruktur eine lichtstreuende Struktur, insbesondere eine isotrope Mattstruktur mit einer Periode von 500 nm bis 1µm ist.

9. Folie nach einem der Ansprüche 1 bis 7.
**dadurch gekennzeichnet,**
**dass** die Grobstruktur eine Makrostruktur mit einer Spatialfrequenz von weniger als 300 Linien pro mm ist.

10. Folie nach einem der vorhergehenden Ansprüche,
**dadurch gekennzeichnet,**
**dass** die diffraktive Struktur einen Bereich aufweist, in dem die diffraktive Struktur aus einer Überlagerung einer ersten Struktur zur Erzeugung eines optischen Effekts mit einer zweiten Struktur größerer Profiltiefe zur Orientierung des Flüssigkristall-Materials gebildet ist.

11. Folie nach Anspruch 10,
**dadurch gekennzeichnet,**
**dass** die Profiltiefe der zweite Struktur wenigstens um 100 nm größer als die der ersten Struktur ist, wobei die Profiltiefe der ersten Struktur insbesondere einen Wert aus dem Bereich von 250 nm bis 400 nm aufweist.

12. Folie nach einem der vorhergehenden Ansprüche,
**dadurch gekennzeichnet,**
**dass** die Schicht aus einem Flüssigkristall-Material die diffraktive Struktur bereichsweise musterförmig bedeckt.

13. Folie nach einem der vorhergehenden Ansprüche,
**dadurch gekennzeichnet,**
**dass** eine der Schichten, insbesondere die Flüssigkristall-Schicht, bereichsweise unterschiedliche Dicke hat.

14. Folie nach einem der vorhergehenden Ansprüche,
**dadurch gekennzeichnet,**
**dass** Farbspiele durch gezielte Orientierungsvariationen der strukturierten Schicht erzielt werden.

15. Folie (2, 3) nach einem der vorhergehenden Ansprüche,
**dadurch gekennzeichnet,**
**dass** die Folie eine Schutzlackschicht (25, 34) aufweist, die die Schicht (24, 33) aus einem Flüssigkristall-Material bedeckt.

16. Folie (8) nach einem der vorhergehenden Ansprüche,
**dadurch gekennzeichnet,**
**dass** die Folie (8) eine weitere Schicht (85) mit einer weiteren optisch wirksamen diffraktiven Struktur (88) aufweist.

17. Folie (7) nach einem der vorhergehenden Ansprüche,
**dadurch gekennzeichnet,**
**dass** eine weitere optisch wirksame diffraktive Struktur (762, 761) auf der der Schicht (74) aus einem Flüssigkristall-Material abgewandten Oberfläche der Replikationsschicht (73) eingeprägt ist.

18. Folie nach Anspruch 16 oder Anspruch 17,
**dadurch gekennzeichnet,**
**dass** die weitere optisch wirksame diffraktive Struktur die diffraktive Struktur zumindest bereichsweise überlagert.

19. Folie nach einem der Ansprüche 7 bis 9,
**dadurch gekennzeichnet,**
**dass** die weitere optisch wirksame diffraktive Struktur die weitere Schicht oder die Replikationsschicht lediglich partiell bedeckt.

20. Folie nach einem der vorhergehenden Ansprüche,
**dadurch gekennzeichnet,**
**dass** die Folie ein Dünnfilmsystem (93) zur Erzeugung von Farbverschiebungen mittels Interferenz aufweist.

21. Folie nach Anspruch 20,
**dadurch gekennzeichnet,**
**dass** das Dünnfilmschichtsystem (93) die diffraktive Struktur (96) zumindest bereichsweise überlagert.

22. Folie nach einem der vorhergehenden Ansprüche,
**dadurch gekennzeichnet,**
**dass** die Transferfolie eine reflektierende Schicht, insbesondere eine metallische Schicht oder eine HRI-Schicht aufweist.

23. Folie nach Anspruch 22,
**dadurch gekennzeichnet,**
**dass** die reflektierende Schicht partiell ausgebildet ist.

24. Optisches Sicherungselement (11, 12; 4) zur Sicherung von Banknoten, Kreditkarten und dergleichen, wobei das optische Sicherungselement (11, 12; 4) eine Replikationsschicht (42) aufweist,
**dadurch gekennzeichnet,**
**dass** das optische Sicherungselement (11, 12; 4) weiter eine Schicht (43) aus einem Flüssigkristall-Material aufweist, die auf der Replikationsschicht (42) aufgebracht ist, und dass in die der Schicht aus einem Flüssigkristall-Material zugewandten Oberfläche der Replikationsschicht (42) eine diffraktive Struktur (46) zur Orientierung des Flüssigkristall-Materials eingeprägt ist, die zumindest zwei Teilbereiche mit unterschiedlichen Orientierungsrichtungen der eingeprägten Struktur aufweist, wobei die diffraktive Struktur einen Bereich aufweist, in dem die diffraktive Struktur (51 bis 55) aus einer Überlagerung einer Grobstruktur zur Erzeugung eines optischen Effekts mit einer Feinstruktur höherer Spatialfrequenz zur Orientierung des Flüssigkristall-Materials gebildet ist.

25. Optisches Sicherungselement nach Anspruch 24,
**dadurch gekennzeichnet,**
**dass** das optische Sicherungselement ein zweiteiliges Sicherungselement ist, wobei ein erstes Teilelement (11) die Replikationsschicht und die Schicht aus einem Flüssigkristall-Material aufweist und das zweite Teilelement (12) einen Polarisator zur Überprüfung des von der Schicht aus einem Flüssigkristall-Materials erzeugten Sicherheitsmerkmals aufweist.

26. Optisches Sicherungselement nach Anspruch 24,
**dadurch gekennzeichnet,**
**dass** das optische Sicherungselement ein zwei- oder mehrteiliges Sicherungselement aus zwei oder mehr Teilelementen ist, wobei sowohl ein erstes Teilelement als auch ein zweites Teilement eine Schicht aus einem Flüssigkristall-Material aufweist, die auf einer Replikationsschicht aufgebracht ist, in die eine diffraktive Struktur zur Orientierung des LCP-Materials eingeprägt ist und die zumindest zwei Teilbereiche mit unterschiedlichen Orientierungsrichtungen der eingeprägten Struktur aufweist, und dass das zweite Teilelement zur Überprüfung des von dem ersten Teilelement erzeugten Sicherheitsmerkmals dient.

## Claims

1. Film (2, 3), in particular an embossed film, laminated film or sticker film, having a supporting layer (21, 31) and a replication layer (23, 32), **characterized in that** the film further has a layer (24, 33) made from a liquid crystal material and which is applied to the replication layer (23, 32), and **in that** there is embossed into the surface, facing the layer (24, 33) made from a liquid crystal material, of the replication layer (23, 32) a diffractive structure (27, 35) which serves for orientating the liquid crystal material and has at least two subregions with different directions of orientation of the embossed structure, the diffractive structure having a region in which the diffractive structure (51 to 55) is formed by superimposing on a coarse structure for producing an optical effect a fine structure of higher spatial frequency for orientating the liquid crystal material.

2. Film according to Claim 1, **characterized in that** the diffractive structure has a region in which the direction of orientation of the structure changes continuously, and which is coated with the layer made from a liquid crystal material.

3. Film according to Claim 1, **characterized in that** the diffractive structure has juxtaposed regions with a different direction of orientation which are coated with the layer made from a liquid crystal material.

4. Film according to Claim 1, **characterized in that** the diffractive structure (68) has a first region (62) for orientating liquid crystal material which is covered by the layer (66) made from a liquid crystal material, and **in that** the diffractive structure (68) has a second region (61, 63) for producing an optical diffraction effect, in particular for producing a hologram.

5. Film according to Claim 4, **characterized in that** a polarization display produced in the first region (62) and a holographic display produced in the second region (61, 63) form mutually complementary displays.

6. Film according to one of the preceding claims, **characterized in that** the fine structure has a period of smaller than 400 nm.

7. Film according to one of Claims 1 to 5, **characterized in that** the spatial frequency of the fine structure is at least ten times higher than the spatial frequency of the coarse structure.

8. Film according to one of the preceding claims, **characterized in that** the coarse structure is a light scattering structure, in particular an isotropic matt structure with a period of 500 nm to 1 µm.

9. Film according to one of Claims 1 to 7, **characterized in that** the coarse structure is a macrostructure with a spatial frequency of less than 300 lines per mm.

10. Film according to one of the preceding claims, **characterized in that** the diffractive structure has a region in which the diffractive structure is formed by superimposing on a first structure for producing an optical effect a second structure of greater profile depth for orientating the liquid crystal material.

11. Film according to Claim 10, **characterized in that** the profile depth of the second structure is at least greater by 100 nm than that of the first structure, the profile depth of the first structure having, in particular, a value in the range of 250 nm to 400 nm.

12. Film according to one of the preceding claims, **characterized in that** the layer made from a liquid crystal material covers parts of the diffractive structure in the form of a pattern.

13. Film according to one of the preceding claims, **characterized in that** one of the layers, in particular the liquid crystal layer, has parts of different thickness.

14. Film according to one of the preceding claims, **characterized in that** plays of colour are achieved by specific variations in the orientation of the structured layer.

15. Film (2, 3) according to one of the preceding claims, **characterized in that** the film has a protective varnish layer (25, 34) which covers the layer (24, 33) made from a liquid crystal material.

16. Film (8) according to one of the preceding claims, **characterized in that** the film (8) has a further layer (85) with a further optically active diffractive structure (88).

17. Film (7) according to one of the preceding claims, **characterized in that** a further optically active diffractive structure (762, 761) is embossed on the surface of the replication layer (73) averted from the layer (74) made from a liquid crystal material.

18. Film according to Claim 16 or Claim 17, **characterized in that** the further optically active diffractive structure is superimposed at least in part on the diffractive structure.

19. Film according to one of Claims 7 to 9, **characterized in that** the further optically active diffractive structure covers the further layer or the replication layer only partially.

20. Film according to one of the preceding claims, **characterized in that** the film has a thin film system (93) for producing colour displacements by means of interference.

21. Film according to Claim 20, **characterized in that** the thin film layer system (93) is superimposed at least in part on the diffractive structure (96).

22. Film according to one of the preceding claims, **characterized in that** the transfer film has a reflecting layer, in particular a metallic layer or an HRI layer.

23. Film according to Claim 22, **characterized in that** the reflecting layer is of partial design.

24. Optical security element (11, 12; 4) for safeguarding banknotes, credit cards and the like, the optical security element (11, 12; 4) having a replication layer (42), **characterized in that** the optical security element (11, 12; 4) further has a layer (43) made from a liquid crystal material and which is applied to the replication layer (42), and **in that** there is embossed into the surface, facing the layer made from a liquid crystal material, of the replication layer (42) a diffractive structure (46) which serves for orientating the liquid crystal material and has at least two subregions with different directions of orientation of the embossed structure, the diffractive structure having a region in which the diffractive structure (51 to 55) is formed by superimposing on a coarse structure for producing an optical effect a fine structure of higher spatial frequency for orientating the liquid crystal material.

25. Optical security element according to Claim 24, **characterized in that** the optical security element is a bipartite security element, a first partial element (11) having the replication layer and the layer made from a liquid crystal material, and the second partial element (12) having a polarizer for checking the security feature produced by the layer made from a liquid crystal material.

26. Optical security element according to Claim 24, **characterized in that** the optical security element is a bipartite or multipartite security element composed of two or more subelements, both a first subelement and a second subelement having a layer which is made from a liquid crystal material and is applied to a replication layer into which a diffractive structure for orientating the LCP material is embossed, and which has at least two subregions with different directions of orientation of the embossed structure, and **in that** the second subelement serves for checking the security feature produced by the first subelement.

## Revendications

1. Film (2, 3) en particulier un film d'estampage, un film stratifié ou un film adhésif, avec une couche de support (21, 31) et une couche de réplique (23, 32),
**caractérisé en ce que**
le film présente aussi une couche (24, 33) en matériau à cristaux liquides, laquelle est appliquée sur la couche de réplique (23, 32) et **en ce que** dans la surface de la couche de réplique (23, 32) orientée vers la couche (24, 33) en matériau à cristaux liquides, est estampée une structure diffractée (27, 35) servant à orienter le matériau à cristaux liquides, qui présente au moins deux parties ayant différents sens d'orientation de la structure estampée, sachant que la structure diffractée présente une zone, dans laquelle la structure diffractée (51 à 55) est constituée d'une superposition d'une structure grossière servant à générer un effet d'optique et d'une structure fine de fréquence spatiale plus élevée et servant à l'orientation du matériau à cristaux liquides.

2. Film selon la revendication 1
**caractérisé en ce que**
la structure diffractée présente une zone dans laquelle le sens d'orientation de la structure change en permanence et qui est recouverte par la couche en matériau à cristaux liquides.

3. Film selon la revendication 1
**caractérisé en ce que**
la structure diffractée présente des zones contigües ayant un sens d'orientation différent, qui sont recouvertes par la couche en matériau à cristaux liquides.

4. Film selon la revendication 1
**caractérisé en ce que**
la structure diffractée (68) présente une première zone servant à l'orientation du matériau à cristaux liquides, qui est recouverte par la couche (66) en matériau à cristaux liquides et **en ce que** la structure diffractée (68) présente une deuxième zone (61, 63) servant à générer un effet optique de diffraction, servant en particulier à générer un hologramme.

5. Film selon la revendication 4
**caractérisé en ce que**
une polarisation générée dans la première zone (62) et un hologramme généré dans la deuxième zone (61, 63) forment une représentation complémentaire.

6. Film selon l'une des revendications précédentes
**caractérisé en ce que**
la structure fine possède une période inférieure à 400 nm.

7. Film selon l'une des revendications 1 à 5
**caractérisé en ce que**
la fréquence spatiale de la structure fine est au moins dix fois plus élevée que la fréquence spatiale de la structure grossière.

8. Film selon l'une des revendications précédentes
**caractérisé en ce que**
la structure grossière est une structure diffusant de la lumière, en particulier une structure mate isotrope avec une période de 500 nm à 1 µm.

9. Film selon l'une des revendications 1 à 7
**caractérisé en ce que**
la structure grossière est une macrostructure avec une fréquence spatiale inférieure à 300 lignes par mm.

10. Film selon l'une des revendications précédentes
**caractérisé en ce que**
la structure diffractée présente une zone dans laquelle la structure diffractée est constituée d'une superposition d'une première structure servant à générer un effet d'optique et d'une deuxième structure de profil plus profond servant à orienter le matériau à cristaux liquides.

11. Film selon la revendication 10
**caractérisé en ce que**
la profondeur de profil de la deuxième structure est au moins supérieure de 100 nm à celle de la première structure, sachant que la profondeur de profil de la première structure présente en particulier une valeur de l'ordre de 250 nm à 400 nm.

12. Film selon l'une des revendications précédentes
**caractérisé en ce que**
la couche en matériau à cristaux liquides recouvre en partie la structure diffractée en forme du motif.

13. Film selon l'une des revendications précédentes
**caractérisé en ce que**
l'une des couches, en particulier la couche en matériau à cristaux liquides, a en partie différentes épaisseurs.

14. Film selon l'une des revendications précédentes
**caractérisé en ce que**
des jeux de couleurs sont obtenus par le biais de variations de l'orientation de la couche structurée.

15. Film (2, 3) selon l'une des revendications précédentes
**caractérisé en ce que**
le film présente une couche de laque de protection (25, 34) qui recouvre la couche (24, 33) en matériau à cristaux liquides.

16. Film (8) selon l'une des revendications précédentes
**caractérisé en ce que**
le film (8) présente une autre couche (85) avec une autre structure diffractée à effet optique.

17. Film (7) selon l'une des revendications précédentes
**caractérisé en ce que**
une autre structure diffractée à effet optique (762, 761) est estampée sur la surface de la couche de réplique (73) opposée à la couche (74) en matériau à cristaux liquides.

18. Film selon la revendication 16 ou selon la revendication 17
**caractérisé en ce que**
l'autre structure diffractée à effet optique se superpose du moins partiellement à la structure diffractée.

19. Film selon l'une des revendications 7 à 9
**caractérisé en ce que**
l'autre structure diffractée à effet optique recouvre l'autre couche ou la couche de réplique seulement partiellement.

20. Film selon l'une des revendications précédentes
**caractérisé en ce que**
le film présente un système de film mince (93) servant à générer des mouvements de couleurs à l'aide d'interférences.

21. Film selon la revendication 20
**caractérisé en ce que**
le système de couche de film mince (93) se superpose du moins partiellement à la structure diffractée (96).

22. Film selon l'une des revendications précédentes
**caractérisé en ce que**
le film de transfert présente une couche réfléchissante, en particulier une couche métallique ou une couche HRI.

23. Film selon la revendication 22
**caractérisé en ce que**
la couche réfléchissante est partiellement façonnée.

24. Élément de sécurité optique (11, 12 ; 4) servant à sécuriser des billets de banque, des cartes de crédit et autres choses similaires, sachant que l'élément de sécurité optique (11, 12 ; 4) présente une couche de réplique (42)
**caractérisé en ce que**
l'élément de sécurité optique (11, 12 ; 4) présente de plus une couche (43) en matériau à cristaux liquides qui est appliquée sur la couche de réplique (42) et **en ce que** dans la surface de la couche de réplique (42) orientée vers la couche en matériau à cristaux liquides, est estampée une structure diffractée (46) servant à orienter le matériau à cristaux liquides, qui présente au moins deux parties ayant des sens d'orientation différents de la structure estampée, sachant que la structure diffractée présente une zone, dans laquelle la structure diffractée (51 à 55) est constituée d'une superposition d'une structure grossière servant à générer un effet d'optique et d'une structure fine de fréquence spatiale plus élevée servant à orienter le matériaux à cristaux liquides.

25. Élément de sécurité optique selon la revendication 24
**caractérisé en ce que**
l'élément de sécurité optique est un élément de sécurité en deux parties, sachant qu'un premier élément partiel (11) présente la couche de réplique et la couche en matériau à cristaux liquides et le deuxième élément partiel (12) présente un polariseur servant à vérifier le caractère de sécurité généré par la couche en matériau à cristaux liquides.

26. Élément de sécurité optique selon la revendication 24
**caractérisé en ce que**
l'élément de sécurité optique est un élément de sécurité à deux parties ou plus de deux ou plusieurs éléments partiels, sachant que tant un premier élément partiel qu'un deuxième élément partiel présente une couche en matériau à cristaux liquides qui est appliquée sur une couche de réplique dans laquelle est estampée une structure diffractée servant à orienter le matériau LCP et qui présente au moins deux zones partielles avec des sens d'orientation différents, et **en ce que** le deuxième élément partiel sert à vérifier le caractère de sécurité généré par le premier élément partiel.
